# EUROPEAN PATENT APPLICATION

(11) **EP 1 274 038 A1**
(43) Date of publication of application: **08.01.2003**
(21) Application number: 02014088.5
(22) Date of filing: 02.07.2002
(51) Int. Cl.: G06K 7/08, G07C 9/00, E05B 65/20

(54) **Method and system for enabling authenticated access of an individual to a security area**

(30) Priority: 03.07.2001 DE 10132031
(71) Applicant: TEXAS INSTRUMENTS DEUTSCHLAND GMBH, 85356 Freising (DE)
(72) Inventor: Meier, Herbert, 85356 Moosburg (DE); Knebelkamp, Michael, 85356 Freising (DE); Winterer, Albert, 84095 Furth (DE)
(74) Representative: Degwert, Hartmut, Dipl.-Phys.

(57) **Abstract**

The method for enabling authenticated access of an individual (10) to a security area (12) by means of a transponder (14) carried by the individual which on receiving an interrogation signal outputs an ID code group, and a control unit (18) located in the security area (12) which generates the interrogation signal and checks the ID code group output by the transponder (14) for enabling access of the individual (10) to the security area (12) only when right of access is authenticated, is characterized in that the interrogation signal is relayed by capactive coupling from the control unit (18) via the individual (10) to the transponder (14).

## Description

The invention relates to a method for enabling authenticated access of an individual to a security area by means of a transponder carried by the individual which on receiving an interrogation signal outputs an ID code group, and a control unit located in the security area which generates the interrogation signal and checks the ID code group output by the transponder for enabling access of the individual to the security area only when right of access is authenticated. The invention relates also a security system for implementing the method.

Transponder-assisted security systems are finding increasing use in enabling access of an individual to a security area. A transponder suitable for one such security system is described, for example, in EP 0301 127 B1. One illustrative example of such a system is enabling access to a locked motor vehicle, i.e. by allowing the vehicle to be unlocked only by an authorized individual carrying, in this case, a transponder, whilst in the vehicle a control unit is provided which outputs an interrogation signal when, for example, the door handle of the vehicle is gripped. This interrogation signal prompts the transponder to send an ID code group which is received and analyzed by the control unit. When the ID code group tallies with the ID code group memorized in the control unit the vehicle lock is disabled and the individual is able to open the unlocked door and thus gain access to the vehicle interior.

Experience has shown this system to have a problematic security aspect, its weak point being more particularly the interrogation signal sent by the control unit and prompting the transponder to return its ID code group. Although this interrogation signal is emitted only at very low power so that it can only be received by the transponder when very near to the antenna sensing the signal. As soon as a distance of approximately 2 m is exceeded, the transponder is incapable of receiving the interrogation signal in thus disabling the ID code group being emitted. There is, however, the possibility of considerably increasing the small distance as needed between the antenna of the control unit and the transponder by, for example, a person in the vicinity of the antenna of the control unit applying a detection coil connecting a relay unit. This person in gripping the door handle of the vehicle prompts transmission of the interrogation signal which is relayed by the relay unit to a second person in the vicinity of the authorized individual. This second person has a receiver capable of receiving the interrogation signal and returning it by the sender antenna. The transponder carried by the authorized individual then reacts to this interrogation signal as if the authorized individual were in the vicinity of a locked vehicle, i.e. it sends the ID code group which is received and returned by the transceiver carried by the second person. The transceiver of the first person receives the ID code group and transmits it so that it is received by the antenna of the control unit in the vehicle. Since the ID code group stems from the transponder of the authorized individual, the result is that the control unit disables the door lock of the vehicle to thus permit the door to be opened by the non-authorized person.

The invention is based on the objective of providing a method and a system which eliminates this security breach.

To achieve this objective the method of the aforementioned kind is characterized by the interrogation signal being relayed by capacitive coupling from the control unit via the individual to the transponder.

In the method in accordance with the invention the interrogation signal is now no longer transmitted by an antenna and then received by the transponder, it instead being relayed exclusively by capacitive coupling from the control unit via the individual wishing to gain access to the security area to the transponder to thus make it impossible for the interrogation signal to be "bugged" and communicated to a location further away in prompting the transponder to output the ID code group. Now, direct or, at least, very close contact between the individual and the control unit, on the one hand, and between the individual and transponder, on the other, is needed for relaying the signal between the control unit and transponder. Without this close contact as made possible by the capacitive coupling, the signal cannot be relayed, thus eliminating the security risk as described above.

Advantageous aspects of the method in accordance with the invention are characterized in the sub-claims.

The security system configured to implement the method in accordance with the invention is characterized in that a sensor surface area is applied to the security area and connected to an oscillator for generating the interrogation signal and that the transponder is provided with two metal surface areas disposed spaced away from each other, between which a potential difference materializes, prompting transmission of the ID code group when the interrogation signal output by the control unit is capacitively coupled via the sensor surface area and the individual to the metal surface areas.

An example embodiment of the invention will now be deetailled with reference to the drawings in which:
Fig. 1 is a diagrammatic illustration of a first aspect of the security system in accordance with the invention and
Fig. 2 is a diagrammatic illustration of a second aspect of the security system in accordance with the invention.

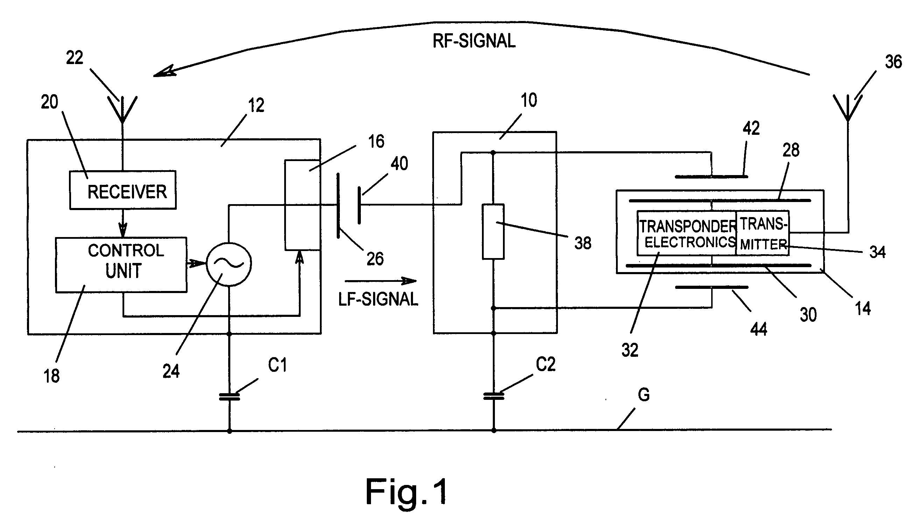

Referring now to Fig. 1 there is illustrated a security system serving to enable an individual 10 to gain authenticated access to a security area 12. For this purpose the individual 10 needs to carry with him a transponder 14. To facilitate understanding the method used for enabling access it is assumed that the security area 12 is a vehicle comprising a door handle 16 provided with a locking mechanism. Provided in this vehicle is a control unit 18 for analyzing and evaluating a signal received by receiver 20 via an antenna 22. Also included in the vehicle is an oscillator 24 which as controlled by the control unit 18 is able to generate a LF signal. Fitted to the door handle 16 is a sensor surface area 26 so that it is touched by the individual 10 as soon as the door handle 16 is gripped. The capacitors C1 and C2 represent respectively the capacitance of the vehicle relative to ground G and the capacitance of the body of the individual 10 relative to ground G.

The transponder 14 comprises two metal surface areas 28, 30 disposed spaced away from each other and connecting the transponder electronics 32, part of which is a transmitter 34 able to transmit via an antenna 36 an ID code group in the form of an RF signal.

The individual 10 is indicated symbolically in Fig. 1 as resistor 38. The hand of the individual 10 extending in the direction of the door handle 16 of the vehicle to touch the sensor surface area 26 is represented as capacitor film 40. The body of the individual 10 is further capacitive coupling to the metal surface areas 28 and 30 of the transponder 14 as is symbolically represented by the two capacitor films 42 and 44 assigned to the metal surface areas 28 and 30 respectively.

The sequence in the events of the method enabling the individual 10 authenticated access to the security area 12 in the illustrative example, i.e. to the vehicle locked by means of the door handle/lock 16 is as follows:

The individual 10 touches the door handle coupled to the door lock 16, resulting in a contact (not shown) being closed which prompts the control unit 18 to activate the oscillator 24. The oscillator 24 then generates a modulated LF signal which is applied to the sensor surface area 26. The hand of the individual 10, indicated symbolically as capacitor plate 40, touches the sensor surface area 26 or is at least in close contact therewith so that the LF signal is capacitively coupled to the individual 10. Via the body of the individual 10 the LF signal is capacitively coupled to the metal surface areas 28 and 30 provided in the transponder 14. Since these metal surface areas 28, 30 are located predefinedly spaced away from each other a potential difference materializes between them which is detected by the transponder electronics 32. This potential difference results from one of the two metal surface areas 28, 30 being assuredly nearer to the body of the individual 10 than the other metal surface area when the transponder is carried on the body of the individual 10. This is assured by the transponder 14 and thus also the metal surface areas 28, 30 having a sheet configuration so that the transponder 14 is carried on the body of the individual 10 with a probability bordering on certainty to produce the cited close contact relationship. As soon as the transponder electronics 32 "sees" that the potential difference exceeds a predefined threshold value and the modulated interrogation signal is received, it prompts the transmitter 34 contained in it to transmit the resulting ID code group in the form of a modulated HF signal via the antenna 36. This signal is received by the receiver 20 via the antenna 22. After decoding the control unit 18 establishes whether the code group tallies with the anticipated code group, and if so, it sends a signal to the door lock 16 which unlocks it to thus enable access to the vehicle and thus to the security area 12.

As explained, the LF signal is relayed from the security area 12 via the individual 10 to the transponder 14 exclusively by means of capacitive coupling so that no signal is emitted which could be "bugged". Accordingly, the transponder 14 can only be prompted to output the ID code group when the transponder is in close contact on the body of the individual 10 and the individual 10 touches the sensor surface area 26 or his hand is at least in the direct vicinity thereof.

In an alternative aspect it may be provided for that the oscillator 24 is not activated by actuation of its own switch, but not until, with participation of the control unit 18, the individual 10 actuates the handle assigned to the door lock 16. It is also possibile to control the oscillator 24 so that it applies the modulated LF signal to the sensor surface area 26 in short periodic intervals to thus ensure that the LF signal is relayed via the individual 10 to the transponder 14 every time the individual 10 touches the sensor surface area 26 or his hand is in the vicinity thereof, and the oscillator 24 has just applied its LF signal to the sensor surface area 26.

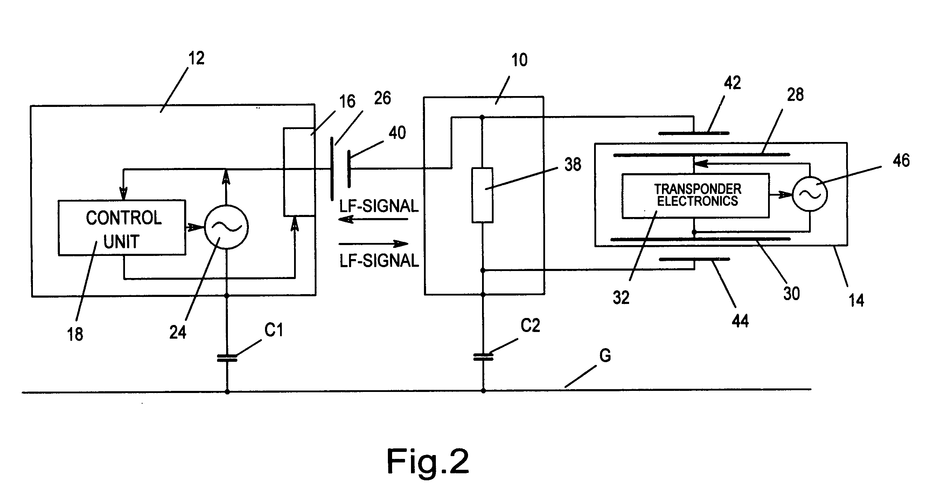

Referring now to Fig. 2 there is illustrated a second embodiment of the invention in which like components are identified by like reference numerals and which differs from the first embodiment as shown in Fig. 1 by the transponder 14 not transmitting the ID code group in the form of an RF signal via the antenna, it instead relaying it back as a modulated LF signal exclusively via capacitive coupling to the sensor surface area 26.

When in the security system as shown in Fig. 2 the transponder 14 "sees" a potential difference violating the predefined threshold value between the metal surface areas 28 and 30 and receives an interrogation signal, it activates an oscillator 46. The signal generated by the oscillator 46 is modulated with the ID code group and applied to the metal surface area 28. By capacitive coupling this modulated LF signal is then coupled via the body of the individual 10 and his hand in the vicinity of the sensor surface area 26 likewise capacitively to the sensor surface area 26 so that it can be received and demodulated by the control unit 18. After the demodulated code group has been compared to the anticipated code group the control unit 18 enables the door handle 16, when agreement is established, so that access to the security area is made possible for the individual.

Applying exclusively capacitive coupling to both signal relay paths from the security area 12 to the transponder 14 and back enhances the security in preventing unauthorized access to the security area 12.

## Claims

1. A method for enabling authenticated access of an individual to a security area by means of a transponder carried by the individual which on receiving an interrogation signal outputs an ID code group, and a control unit located in the security area which generates the interrogation signal and checks the ID code group output by the transponder for enabling access of the individual to the security area only when right of access is authenticated, **characterized in that** said interrogation signal is relayed by capactive coupling from said control unit (18) via said individual (10) to said transponder (14).

2. The method as set forth in claim 1, **characterized in that** said control unit (18) prompts output of said interrogation signal when activated by said individual.

3. The method as set forth in claim 1, **characterized in that** said control unit (18) prompts output of said interrogation signal in regular time intervals.

4. The method as set forth in any of the claims 1-3, **characterized in that** said ID code group is transmitted via an antenna (36) as an RF signal after receiving said interrogation signal from said transponder (14).

5. The method as set forth in any of the claims 1-3, **characterized in that** said ID code group is relayed by capacitive coupling from said transponder (14) via said individual to said control unit (18) on receiving said interrogation signal.

6. A security system for implementing the method as set forth in any of the preceding claims, whereby said transponder is to be carried in the direct vicinity of the body of said individual, **characterized in that** a sensor surface area (26) is applied to said security area (12) and connected to an oscillator (24) for generating said interrogation signal and that said transponder (14) is provided with two metal surface areas (28, 30) disposed spaced away from each other between which a potential difference materializes, prompting transmission of said ID code group when said interrogation signal output by said control unit (18) is capacitively coupled via said sensor surface area (26) and said individual (10) to said metal surface areas (28, 30).

7. The security system as set forth in claim 6, **characterized in that** contained in said transponder (14) is a transmitter (34) which in the presence of said potential difference between said two metal surface areas (28, 30) transmits said ID code group in the form of an RF signal.

8. The security system as set forth in claim 6, **characterized in that** contained in said transponder (14) is a modulatable oscillator which in the presence of said potential difference between said two metal surface areas (28, 30) applies a LF signal modulated with said ID code group to said metal surface areas (28, 30) for capacitive coupling via said individual (10) to said sensor surface area (26).
